# EUROPEAN PATENT APPLICATION

(11) **EP 4 009 122 A1**
(43) Date of publication of application: **08.06.2022**
(21) Application number: 21212560.3
(22) Date of filing: 06.12.2021
(51) Int. Cl.: G05B 19/404, G05B 19/416, B25J 9/16

(54) **CONVEYING APPARATUS**

(30) Priority: 07.12.2020 JP 2020202991
(71) Applicant: Yushin Precision Equipment Co. , Ltd., Kyoto (JP)
(72) Inventor: WATANABE, Fumitake, Minami ku (JP); SHIRASAKI, Atsushi, Minami ku (JP); ANDO, Kazutaka, Minami ku (JP)
(74) Representative: Wilson Gunn

(57) **Abstract**

A conveying apparatus that facilitates setting of an operation mode and setting of appropriate conditions during teaching is provided. An input determination section determines whether or not a combination of a conveyable weight and an operation mode input from an input portion is appropriate. A motor parameter determination section determines one or more motor parameters of at least one servoamplifier for one or more servomotors based on the operation mode and the conveyable weight determined as appropriate by the input determination section. The one or more motor parameters include a maximum speed and a maximum acceleration of the one or more servomotors. A parameter change section allows a speed and an acceleration of the one or more servomotors to be changed up to the maximum speed and the maximum acceleration, respectively.

## Description

### TECHNICAL FIELD

The present invention relates to a conveying apparatus that facilitates setting of an operation mode and setting of appropriate conditions during teaching.

### BACKGROUND ART

Japanese Unexamined Patent Application Publication No. 2009-292066 discloses an apparatus for taking out a molded product (conveying apparatus) according to the related art, including a controller device (control device) configured to allow selection of one of a power-saving operation mode, in which the power consumption is reduced compared to operation in a standard operation mode determined in advance, and a soft operation mode (low-speed mode), in which vibration is reduced compared the operation in the standard operation mode. The controller device is configured to be able to set a desired operation mode by changing setting elements and/or setting data for the standard operation mode determined in advance. The apparatus described in this publication merely displays setting items set in advance in accordance with a selected operation mode, and cannot set appropriate conditions.

Meanwhile, Japanese Patent No. 5331376 discloses an apparatus configured to measure a weight and to select an operation mode that matches the weight.
[Patent Document 1] Japanese Unexamined Patent Application Publication No. 2009-292066 (JP2009-292066A)
[Patent Document 2] Japanese Patent No. 5331376 (JP5331376)

### SUMMARY OF INVENTION

### TECHNICAL PROBLEM

However, Japanese Unexamined Patent Application Publication No. 2009-292066 and Japanese Patent No. 5331376 do not disclose how to set conditions of control parameters such as speed and acceleration. It takes time for even a skilled worker to set a desired operation mode (such as a power-saving operation mode and a soft operation mode) and conditions for the operation mode by changing setting elements and/or setting data for the standard operation mode. If an inexperienced worker performs this setting work, he/she occasionally makes settings for conveying work at a low speed in consideration of safety. Therefore, the function of the conveying apparatus cannot be fully utilized in the related art.

An object of the present invention is to provide a conveying apparatus that facilitates setting of an operation mode and setting of appropriate conditions during teaching.

Another object of the present invention is to provide a conveying apparatus that facilitates setting of an operation mode and setting of appropriate conditions during teaching, and that makes it possible to make full use of the vibration suppression function of the conveying apparatus.

### SOLUTION TO PROBLEM

The present invention provides a conveying apparatus including: a conveying mechanism including a take-out head operable to take out an object to be conveyed and a head moving mechanism operable to move the take-out head, the conveying mechanism being operable to convey the object to be conveyed; and a control device including a control section configured to control a power source for the conveying mechanism. The power source is one or more servomotors operable to move one or more movable portions of the head moving mechanism. In the present invention, the control device includes an input portion, an input determination section, a motor parameter determination section, and a parameter change section. The input portion is used to input at least a conveyable weight, which is obtained by adding a weight of the take-out head and a weight of the object to be conveyed, and an operation mode when teaching is performed. The operation mode is input as selected from a plurality of operation modes. The input determination section determines whether or not a combination of the conveyable weight and the operation mode input from the input portion is appropriate. The motor parameter determination section determines one or more motor parameters of at least one servoamplifier for the one or more servomotors based on the operation mode and the conveyable weight determined as appropriate by the input determination section. The parameter change section changes the one or more motor parameters determined by the motor parameter determination section. The one or more motor parameters include a maximum speed and a maximum acceleration of the one or more servomotors . The parameter change section allows a speed and an acceleration of the one or more servomotors to be changed up to the maximum speed and the maximum acceleration, respectively.

In the present invention, the input determination section determines whether or not a combination of the conveyable weight and the operation mode input from the input portion is appropriate. Thus, an inexperienced worker cannot set an erroneous combination of the conveyable weight and the operation mode even if he/she attempts to. The motor parameter determination section determines the one or more motor parameters of the at least one servoamplifier for the one or more servomotors based on the operation mode and the conveyable weight when the input determination section determines that a combination of the operation mode and the conveyable weight is appropriate. Thus, a worker that has little knowledge about setting of motor parameters may not erroneously set the parameters . In the present invention, in particular, the maximum speed and the maximum acceleration of the one or more servomotors, which are the most difficult to set during teaching, are included in the one or more motor parameters, which significantly reduces the burden on the worker who makes settings. Moreover, a worker that has some knowledge about setting of conditions can make more appropriate settings, since the parameter change section allows the speed and the acceleration of the one or more servomotors to be changed up to the maximum speed and the maximum acceleration, respectively. Also in such a case, the worker can be prevented from making settings that may break the conveying apparatus, since the maximum speed and the maximum acceleration are used as upper limit values .

Specifically, the operation mode is one operation mode selected from a plurality of operation modes determined in advance. The input determination section is configured to make a determination based on information on allowable combinations of the plurality of operation modes and a plurality of conveyable weight ranges, which are determined in advance. The motor parameter determination section is configured to determine the one or more motor parameters based on information on allowable relationships among the plurality of operation modes, the plurality of conveyable weight ranges, and the one or more motor parameters, which are determined in advance. Therefore, it is not necessary for the worker to have a full knowledge about the details of setting of conditions.

Preferably, the control section of the control device includes a function of suppressing vibration of the take-out head using a vibration suppression function with which the at least one servoamplifier for the one or more servomotors is equipped. In this case, preferably, the control device further includes a vibration suppression parameter determination section configured to determine one or more vibration suppression parameters of the at least one servoamplifier, the vibration suppression parameters being determined according to the conveyable weight and a stroke amount of the take-out head. The control section executes the vibration suppression function using the one or more vibration suppression parameters determined by the vibration suppression parameter determination section. In this manner, it is basically not necessary for the worker to set the vibration suppression parameters for vibration suppression, as well as to set conditions for teaching. As a result, it is possible to significantly reduce the burden on the worker required for the setting work.

Preferably, the vibration suppression parameter determination section receives the stroke amount input from the input portion when the teaching is performed. In this manner, the worker can set the vibration suppression parameters unintentionally.

Preferably, the one or more vibration suppression parameters include a frequency of a frequency filter of the at least one servoamplifier. Vibration can be suppressed by setting the frequency of the frequency filter to a value that is close to a natural frequency determined according to the conveyable weight and the stroke amount of the movable portion.

Preferably, the control device further includes a balance adjustment section configured to correct a balance of the one or more vibration suppression parameters.

When the conveying apparatus is used to take out a resin molded product, as the object to be conveyed, from a mold of the molding machine, preferably, the one or more vibration suppression parameters include at least a vibration suppression parameter for suppressing vibration of the take-out head in a pull-out direction which is a direction in which the take-out head is moved to take out the molded product. Operation in the pull-out direction relates to both suction and pull-out of the molded product, and it takes extra time since take-out fails if both suction and pull-out are not accurately performed. There is also a risk that the take-out head collides with a die when the take-out head vibrates significantly. However, it is necessary to reduce the time for which the die is open, and it is desired to increase the operation speed and acceleration as much as possible, because of the cycle time. Since the operation is performed in the die, however, forcible adjustment may cause unexpected vibration, which may cause a collision with the die or a failure to take out. With the present invention, teaching adjustment can be easily performed by setting the maximum speed and the maximum acceleration in the appropriate range in consideration of vibration. As a matter of course, the one or more vibration suppression parameters may include a vibration suppression parameter for suppressing vibration of the take-out head in the up-down direction and the transverse direction.

### BRIEF DESCRIPTION OF DRAWINGS

Fig. 1 is a block diagram illustrating the configuration of an embodiment in which the present invention is applied to an apparatus for taking out a molded product as an example of a conveying apparatus for taking out a molded product from a molding machine.
Fig. 2 is an example of a flowchart of a program for use to implement a main portion of a control device using a microcomputer.
Fig. 3 illustrates an example of screen display of an input portion that is used to input a conveyable weight and an operation mode.
Fig. 4 illustrates an example of the relationship among a plurality of operation modes, allowable conveyable weight ranges, and speed ranges.
Figs. 5A and 5B each illustrates a display screen for performing an operation to change the speed and the acceleration up to a maximum speed and a maximum acceleration using a parameter change section when the maximum speed and the maximum acceleration are determined as one or more motor parameters of at least one servoamplifier for one or more servomotors.
Fig. 6 is a table of a vibration suppression parameter determined by the weight and the stroke amount.
Fig. 7 illustrates an example of display on a display screen for a case where the conveyable weight and the stroke amount are set at the same time.

### DESCRIPTION OF EMBODIMENTS

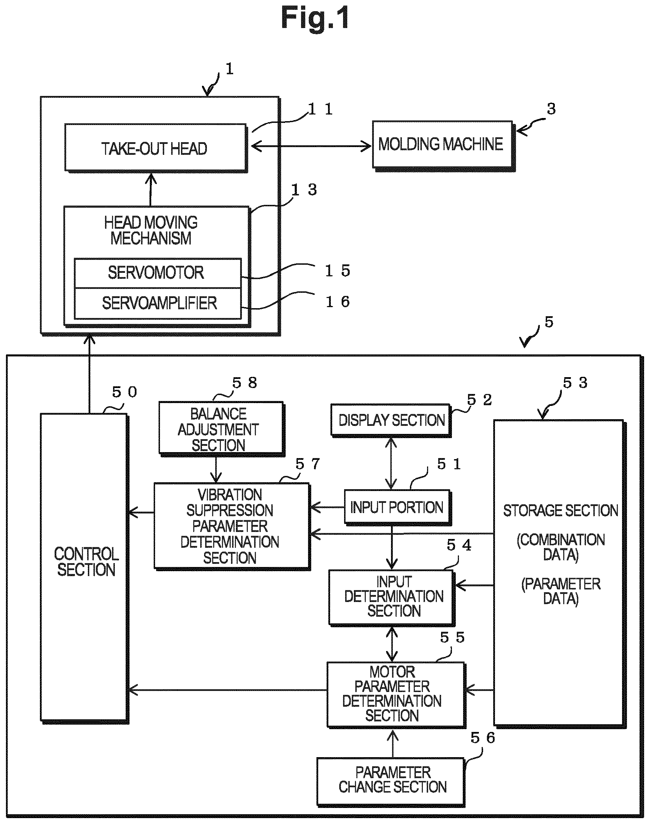

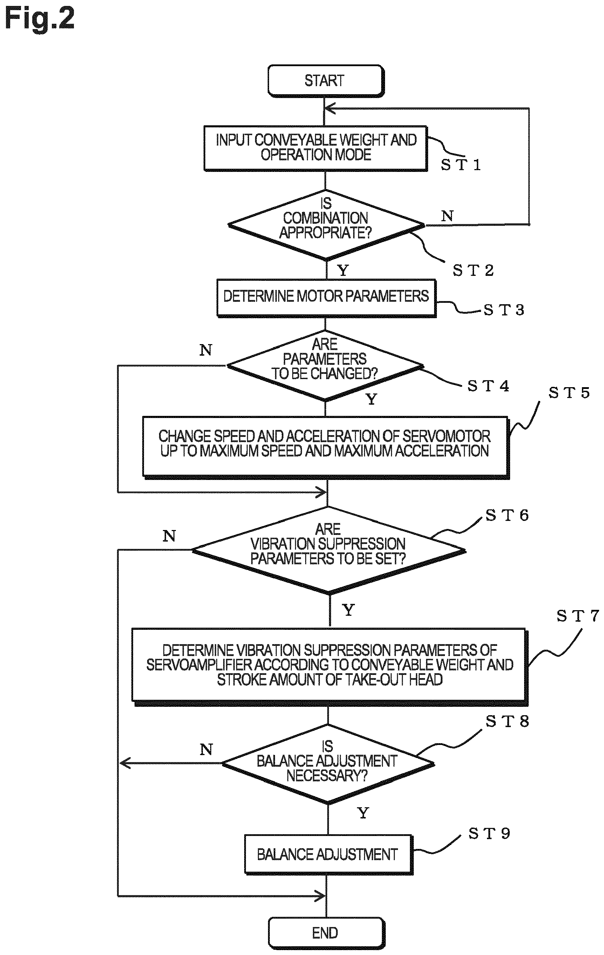

A conveying apparatus according to an embodiment of the present invention will be described in detail below with reference to the drawings. Fig. 1 is a block diagram illustrating the configuration of an embodiment in which the present invention is applied to an apparatus for taking out a molded product as an example of a conveying apparatus for taking out a molded product from a molding machine. Fig. 2 illustrates an example of an algorithm of a program for use to implement a main portion of a control device 5 according to the embodiment in Fig. 1 using a microcomputer.

In Fig. 1, reference numeral 1 denotes a conveying mechanism operable to take out a molded product (object to be conveyed) from a mold of a molding machine 3 and to convey the molded product to a predetermined position. The conveying mechanism 1 includes a take-out head 11 operable to take out a molded product from a die of the molding machine 3, and a head moving mechanism 13 operable to move the take-out head 11. The head moving mechanism 13 may be a three-axis moving mechanism including a frame with three axes extending in the X, Y, and Z directions, or a multi-joint moving mechanism, for example. In the present embodiment, however, the head moving mechanism 13 is a three-axis moving mechanism in which an approach frame operable to move the take-out head into the die is disposed orthogonally to a movable frame operable to move the approach frame closer to and away from the die, and also disposed orthogonally to a fixed frame on which the movable frame is movably supported. A plurality of servomotors 15 are used as drive sources for a plurality of movable portions that are movable along the respective axes. In Fig. 1, only one of the servomotors is illustrated as a typical example. Each of the plurality of servomotors 15 is controlled by the control device 5. A control section 50 of the control device 5 includes a function of suppressing vibration of the take-out head 11 using a vibration suppression function with which at least one servoamplifier 16 for the one or more servomotors 15 is equipped, and controls the one or more servomotors 15 as power sources according to an operation mode etc. specified by an input from an input portion 51 to be discussed later.

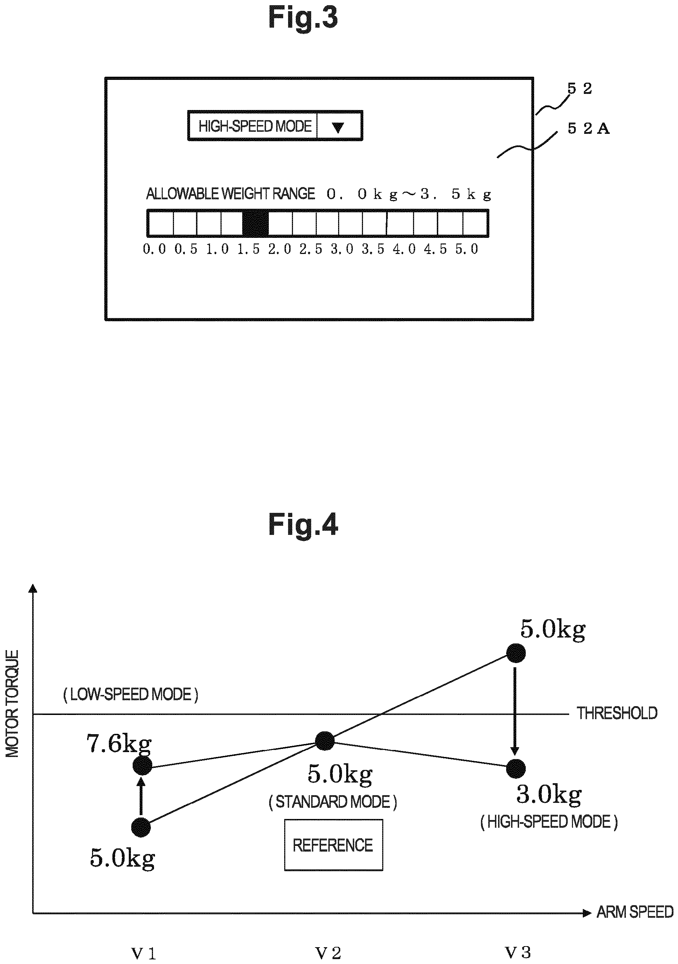

The control device 5 includes the control section 50, the input portion 51, a display section 52, a storage section 53, an input determination section 54, a motor parameter determination section 55, a parameter change section 56, a vibration suppression parameter determination section 57, and a balance adjustment section 58. The input portion 51 is used to input a conveyable weight, which is obtained by adding at least the weight of the take-out head 11 and the weight of an object to be conveyed (molded product) to be taken out from the mold of the molding machine 3, and an operation mode during teaching, for example. In the present embodiment, one operation mode selected from a plurality of operation modes (a high-speed mode, a standard mode, and a low-speed mode in the present embodiment) is input. Fig. 3 illustrates an example of screen display (display on a display screen 52A of the display section 52 in the present embodiment) of the input portion 51 for inputting a conveyable weight and an operation mode. In the example illustrated in Fig. 3, the allowable range of the conveyable weight in the high-speed mode is indicated as 0.0 kg to 3.5 kg, and the conveyable weight can be selected (set) using a touch switch. In this example, it is indicated that a conveyable weight of 1.5 kg is selected by changing the display mode (changing the color of a switch portion or flashing the switch portion) . If a selected conveyable weight is outside an allowable range WR determined according to the operation mode, the conveyable weight is not selected even if a touch switch is touched. A switch portion may be displayed so as to allow selection of only a selectable allowable range of the conveyable weight determined according to the operation mode.

Fig. 4 illustrates an example of the relationship among a plurality of operation modes, allowable conveyable weight ranges WR, and speed ranges. In Fig. 4, the horizontal axis is the arm speed (the speed of an arm operable to move the take-out head 11), and the vertical axis is motor torque of the servomotor 15 as a drive source for driving the arm. In this example, when the high-speed mode is selected, the allowable range WR of the conveyable weight is 0 kg to 3 kg, and the uppermost limit value of the speed range is V3 (e.g. 3.3 m/s). In the high-speed mode, motor torque can be reduced to be less than a threshold for life by reducing the conveyable weight (e.g. 3 kg), and motor torque is caused to exceed the threshold to shorten life by increasing the conveyable weight (e.g. 5 kg). Thus, the allowable range of the conveyable weight in the high-speed mode is determined in a range in which the motor torque does not exceed the threshold. When the low-speed mode is selected, meanwhile, the allowable range WR of the conveyable weight is 5 kg to 7.6 kg, and the uppermost limit value of the speed range is V1 (e.g. 2.5 m/s). When the conveyable weight is in the allowable range WR, motor torque of the servomotor does not exceed the threshold. When the standard mode (reference) is selected, the allowable range WR of the conveyable weight is 3 kg to 5 kg, and the median value of the speed range is V2 (e.g. 3.0 m/s). In Fig. 3, the "threshold" indicates any value determined in consideration of the durability limit of the conveying apparatus in terms of structure.

The input determination section 54 determines whether or not a combination of the conveyable weight and the operation mode input from the input portion 51 is appropriate. That is, the combinations of the three operation modes and the allowable range of the conveyable weight indicated in Fig. 4 are allowable combinations. When an operation mode and a conveyable weight that are not included in such combinations are input from the input portion 51, the input determination section 54 does not send such input to the motor parameter determination section 55, and causes the display section 52 to display an indication for requesting re-input of an operation mode and a conveyable weight. Display of the allowable range of the weight on the display screen 52A in Fig. 3 is an example of the indication for indirectly requesting re-input. When the allowable range is not displayed but only a weight select switch is displayed, re-input may be indirectly requested by allowing a user to select only an operation mode that is selectable for a selected weight.

The motor parameter determination section 55 determines one or more motor parameters of the at least one servoamplifier 16 for the one or more servomotors 15 based on the operation mode and the conveyable weight determined as appropriate by the input determination section 54. The parameter change section 56 allows the speed and the acceleration of the one or more servomotors 15 to be changed up to a maximum speed MV and a maximum acceleration MA, respectively.

In the present embodiment, the input determination section 54 determines whether or not a combination of the conveyable weight and the operation mode input from the input portion 51 is appropriate. Thus, safety is ensured, since an inexperienced worker cannot set an erroneous combination of the conveyable weight and the operation mode even if he/she attempts to. In addition, the motor parameter determination section 55 determines at least the maximum speed MV and the maximum acceleration MA as the one or more motor parameters of the at least one servoamplifier 16 for the one or more servomotors 15 based on the operation mode and the conveyable weight when the input determination section 54 determines that a combination of the operation mode and the conveyable weight is appropriate . Thus, safe settings can be made by using the maximum speed MV and the maximum acceleration MA as the upper limit values.

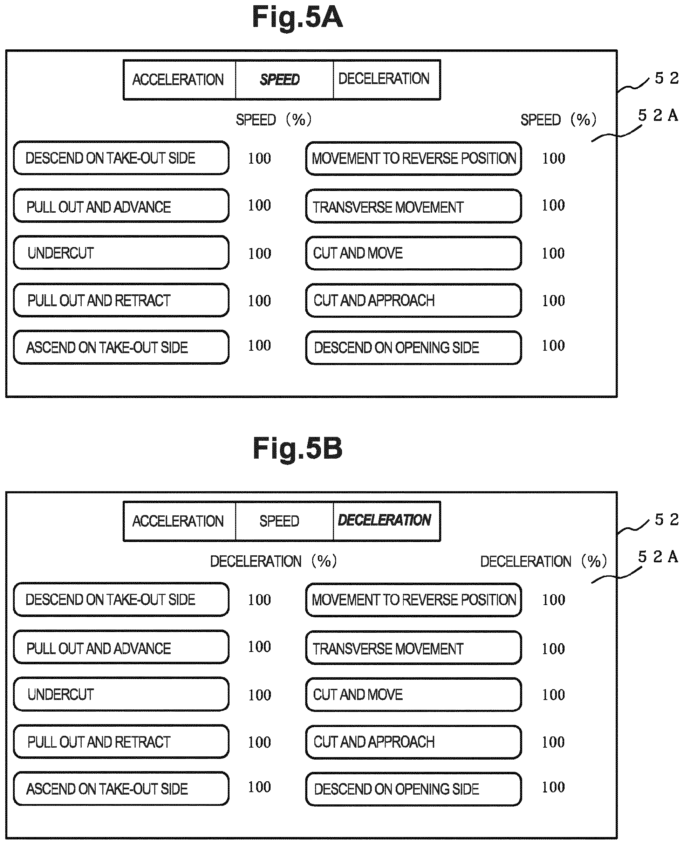

Figs. 5A and 5B each illustrates the display screen 52A for performing an operation to change the speed and the acceleration up to the maximum speed MV and the maximum acceleration MA using the parameter change section 56 when the maximum speed MV and the maximum acceleration MA are determined as the one or more motor parameters of the at least one servoamplifier 16 for the one or more servomotors 15. In the present embodiment, touch switches are displayed on the display screen of the display section 52. Figs. 5A and 5B illustrate an example of the display screen 52A for setting the "speed" and the "acceleration (deceleration") after the high-speed mode and the conveyable weight are input as an appropriate combination. In the examples in Figs. 5A and 5B, the speed and the acceleration of each servomotor 15 for use in operations including "descend on take-out side", "pull out and advance", "undercut", "pull out and retract", "ascend on take-out side", "movement to determination position", "transverse movement", "cut and move", "cut and approach", and "descend on opening side" can be changed. This change can be selected with the upper limit values (maximum speed MV and maximum acceleration MA) of a speed range VR and an acceleration range AR defined as 100%. In the present embodiment, the speed and the acceleration are automatically set to 100% as the upper limit values (maximum speed MV and maximum acceleration MA) if a change operation is not performed using the parameter change section 56. As a matter of course, parameters of the speed and the acceleration to be first input to the control section 50 may be appropriate values that are less than the maximum speed MV and the maximum acceleration MA, even if the motor parameter determination section 55 determines the maximum speed MV and the maximum acceleration MA, when the parameter change section 56 is provided. In such a case, the indication of "100%" in Figs. 5A and 5B is displayed as a value corresponding to the appropriate value such as "50%", for example.

The display screen 52A for changing the speed V and the acceleration A illustrated in Figs. 5A and 5B is configured to allow selecting an amount of decrease from the maximum value of the speed range and the acceleration range. Thus, in the present embodiment, an amount of decrease (amount of reduction) from the maximum value of the speed range and the acceleration range is selected with the maximum speed and the maximum acceleration determined according to the input operation mode and conveyable weight as the upper limit values. The maximum speed MV (maximum acceleration MA) is obtained when "100%" is selected, and the minimum speed (minimum acceleration) is obtained when "1%" is selected.

With such a configuration, a worker that has little knowledge about setting of motor parameters may not erroneously set the parameters. In the present embodiment, in particular, the maximum speed MV and the maximum acceleration MA of the one or more servomotors 15, which are the most difficult to set during teaching, are included in the one or more motor parameters, which significantly reduces the burden on the worker who makes settings . Moreover, a worker that has some knowledge about setting of conditions can make more appropriate settings, since the parameter change section 56 allows the speed and the acceleration of the one or more servomotors 15 to be changed up to the maximum speed MV and the maximum acceleration MA, respectively. Also in such a case, the worker can be prevented from making settings that may break the conveying apparatus, since the maximum speed MV and the maximum acceleration MA are used as upper limit values.

In the present embodiment, the control section 50 of the control device includes a function of suppressing vibration of the take-out head 11 using a vibration suppression function with which the at least one servoamplifier 16 for the one or more servomotors 15 is equipped. Thus, the control device 5 is provided with the vibration suppression parameter determination section 57 and the balance adjustment section 58. The vibration suppression parameter determination section 57 determines one or more vibration suppression parameters of the at least one servoamplifier, the vibration suppression parameters being determined according to the conveyable weight and the stroke amount of the take-out head. The control section 50 executes the vibration suppression function using the one or more vibration suppression parameters determined by the vibration suppression parameter determination section 57. In this manner, it is basically not necessary for the worker to set the vibration suppression parameters for vibration suppression, as well as to set conditions for teaching. As a result, it is possible to significantly reduce the burden on the worker required for the setting work.

The vibration suppression parameter determination section 57 has received, in advance, the stroke amount input from the input portion 51 and determined when the teaching is performed. The stroke amount may be stored in advance in the storage section 53. In addition, the storage section 53 stores, in advance, data on one or more vibration suppression parameters of the at least one servoamplifier, the vibration suppression parameters being determined according to the conveyable weight and the stroke amount of the take-out head.

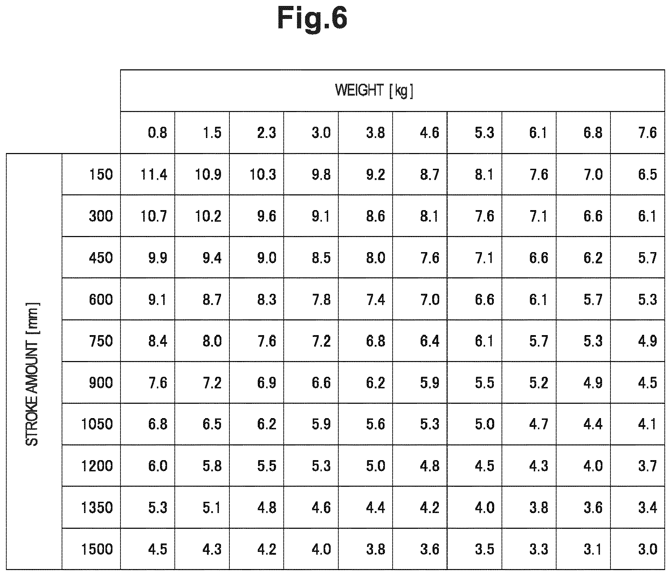

In the present embodiment, as illustrated in Fig. 6, the storage section 53 stores table data indicating the relationships among the one or more vibration suppression parameters of the at least one servoamplifier 16 determined according to the conveyable weight and the stroke amount of an approach frame to which the take-out head 11 is mounted (corresponding to the length of the approach frame extending from a fixed position) determined in advance in correspondence with the plurality of operation modes. The table in Fig. 6 indicates an example of vibration suppression parameters associated with acceleration. This table is an example of a table for a case where the standard mode is selected as the operation mode. This table is varied according to the machine body structure, and therefore it is necessary to accordingly prepare a table when the machine body structure is varied. When a plurality of types of vibration suppression parameters are provided, in addition, it is necessary to prepare a table including a corresponding number of vibration suppression parameters. In the table in Fig. 6, the vibration suppression parameter is determined as 7.5 (a value associated with the acceleration in the present embodiment) when a conveyable weight of 3.8 kg is selected and a stroke amount of 600 mm is selected, for example. This vibration suppression parameter is output to the control section 50.

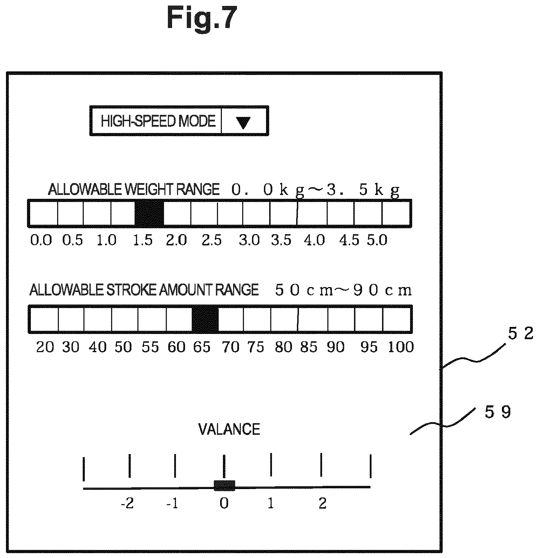

In the present embodiment, as illustrated in Fig. 7, the display section 52 further includes a setting section 59 for the balance adjustment section 58 configured to correct the balance of the one or more vibration suppression parameters. It is not necessary to provide the balance adjustment section 58. In the present embodiment, the balance adjustment section 58 corrects the vibration suppression parameters by changing a correction coefficient for multiplying the determined vibration suppression parameters within an allowable range. When the one or more vibration suppression parameters include a frequency of a frequency filter of the at least one servoamplifier, vibration can be suppressed by setting the frequency of the frequency filter to a value that is closed to a natural frequency determined according to the conveyable weight and the stroke amount of the movable portion. Thus, the balance adjustment section 58 is used to adjust the frequency of the frequency filter of the at least one servoamplifier according to the shape or the dimension of the take-out head. The setting section 59 in Fig. 7 multiplies the determined vibration suppression parameters by a coefficient of 1 to use the determined parameters as they are when the adjustment amount is 0, and makes it possible to change the coefficient in the range of 0.97 to 1.03 by sliding a slider. The amount of data prepared in advance can be significantly reduced by providing such a balance adjustment section 58.

The stroke amount may be input during setting of the conveyable weight and setting of the operation mode, rather than during teaching. Fig. 7 illustrates an example of a screen including an input switch for inputting the stroke amount. An adjustment switch of the balance adjustment section 58 is also displayed in Fig. 7. The vibration suppression parameters are basically determined according to the stroke amount and the conveyable weight. Since a wide variety of take-out heads with different positions of the center of gravity and different rigidity values are used in practice, however, vibration suppression can be more effectively performed when the balance adjustment section 58 configured to correct the balance of the vibration suppression parameters is provided. The phrase "correct the balance" means correcting the vibration suppression parameters by changing a correction coefficient for multiplying the determined vibration suppression parameters within an allowable range. Vibration suppression can be more effectively performed by providing such a balance adjustment section.

When the conveying mechanism 1 is used to take out a resin molded product, as the object to be conveyed, from a mold of the molding machine 3, preferably, the one or more vibration suppression parameters include at least a vibration suppression parameter for suppressing vibration of the take-out head 11 in a pull-out direction which is a direction in which the take-out head 11 is moved to take out the molded product. This is because operation in the pull-out direction relates to both suction and pull-out of the molded product, and it takes extra time since take-out fails if both suction and pull-out are not accurately performed. Another reason is the risk that the take-out head 11 collides with a die if significant vibration is caused during pull-out. As a matter of course, the one or more vibration suppression parameters may include a vibration suppression parameter for suppressing vibration of the take-out head in the up-down direction and the transverse direction.

Fig. 2 is a flowchart illustrating an example of an algorithm of a program for use to implement a main portion of the control device 5 according to the present embodiment using a CPU of a microcomputer. When a worker first inputs a conveyable weight and an operation mode using the input portion 51 in step ST1, it is determined in step ST2 whether or not the combination of the conveyable weight and the operation mode is appropriate. If the combination is determined to be appropriate in step ST2, motor parameters (maximum speed and maximum acceleration in the present embodiment) are determined in step ST3. If the combination is not determined to be appropriate in step ST2, the process returns to step ST1, and input is made again. When motor parameters are determined in step ST3, it is determined in step ST4 whether or not the parameters are to be changed. If it is necessary to change the parameters, the process proceeds to step ST5, and the speed and the acceleration of the servomotor are changed up to the maximum speed and the maximum acceleration, respectively. If the motor parameters are not to be changed in step ST4, and when the motor parameters are changed in step ST5, the process proceeds to step ST6, and it is determined whether or not it is necessary to set vibration suppression parameters. If it is necessary to set vibration suppression parameters, the process proceeds to step ST7. In step ST7, one or more vibration suppression parameters of the at least one servoamplifier are determined, the vibration suppression parameters being determined according to the conveyable weight and the stroke amount of the take-out head. In step ST8, it is determined whether or not balance adjustment is necessary. If balance adjustment is necessary, adjustment is made in step ST9, and the process is ended. If it is not necessary to set vibration suppression parameters, or if it is not necessary to adjust the vibration suppression parameters, the steps are ended.

### INDUSTRIAL APPLICABILITY

In the present invention, the input determination section determines whether or not a combination of the conveyable weight and the operation mode input from the input portion is appropriate. Thus, an inexperienced worker cannot set an erroneous combination of the conveyable weight and the operation mode even if he/she attempts to. The motor parameter determination section determines the one or more motor parameters of the at least one servoamplifier for the one or more servomotors based on the operation mode and the conveyable weight when the input determination section determines that a combination of the operation mode and the conveyable weight is appropriate. Thus, a worker that has little knowledge about setting of motor parameters may not erroneously set the parameters. Moreover, a worker that has some knowledge about setting of conditions can make more appropriate settings, since the parameter change section allows the speed and the acceleration of the one or more servomotors to be changed up to the maximum speed and the maximum acceleration, respectively. Also in such a case, the worker can be prevented from making settings that may break the conveying apparatus, since the maximum speed and the maximum acceleration are used as upper limit values.

## Claims

1. A conveying apparatus comprising:
a conveying mechanism (1) including a take-out head (11) operable to take out an object to be conveyed and a head moving mechanism (13) operable to move the take-out head (11), the conveying mechanism (1) being operable to convey the object to be conveyed; and
a control device (5) including a control section (50) configured to control a power source for the conveying mechanism (1),
the power source being one or more servomotors (15) operable to move one or more movable portions of the head moving mechanis m (13), **characterized in that**:
the control device (5) includes
an input portion (51) that is used to input at least a conveyable weight, which is obtained by adding a weight of the take-out head (11) and a weight of the object to be conveyed, and an operation mode when teaching is performed,
an input determination section (54) configured to determine whether or not a combination of the conveyable weight and the operation mode input from the input portion (51) is appropriate,
a motor parameter determination section (55) configured to determine one or more motor parameters of at least one servoamplifier (16) for the one or more servomotors (15) based on the operation mode and the conveyable weight determined as appropriate by the input determination section (54), and
a parameter change section (56) configured to change the one or more motor parameters determined by the motor parameter determination section (55);
the one or more motor parameters include a maximum speed and a maximum acceleration of the one or more servomotors (15); and
the parameter change section (56) allows a speed and an acceleration of the one or more servomotors (15) to be changed up to the maximum speed and the maximum acceleration, respectively.

2. The conveying apparatus according to claim 1, wherein:
the operation mode is one operation mode selected from a plurality of operation modes determined in advance;
the input determination section (54) is configured to make a determination based on information on allowable combinations of the plurality of operation modes and a plurality of conveyable weight ranges, which are determined in advance; and
the motor parameter determination section (55) is configured to determine the one or more motor parameters based on information on allowable relationships among the plurality of operation modes, the plurality of conveyable weight ranges, and the one or more motor parameters, which are determined in advance.

3. The conveying apparatus according to claim 1 or 2, wherein:
the control section (50) of the control device (5) includes a function of suppressing vibration of the take-out head (11) using a vibration suppression function with which the at least one servoamplifier for the one or more servomotors (15) is equipped;
the control device (5) further includes a vibration suppression parameter determination section (57) configured to determine one or more vibration suppression parameters of the at least one servoamplifier (16), the vibration suppression parameters being determined according to the conveyable weight and a stroke amount of the take-out head (11); and
the control section (50) executes the vibration suppression function using the one or more vibration suppression parameters determined by the vibration suppression parameter determination section (57).

4. The conveying apparatus according to claim 3, wherein
the vibration suppression parameter determination section (57) receives the stroke amount input from the input portion (51) when the teaching is performed.

5. The conveying apparatus according to claim 3 or 4, wherein
the one or more vibration suppression parameters include a frequency of a frequency filter of the at least one servoamplifier.

6. The conveying apparatus according to claim 5, wherein
the control device (5) further includes a balance adjustment section (58) configured to correct a balance of the one or more vibration suppression parameters.

7. The conveying apparatus according to claim 3 that is used to take out a molded product, as the object to be conveyed, from a mold of a molding machine (3), wherein
when a direction in which the take-out head (11) is moved to take out the molded product is defined as a pull-out direction, the one or more vibration suppression parameters include at least a vibration suppression parameter for suppressing vibration of the take-out head (11) in the pull-out direction.
